# EUROPEAN PATENT APPLICATION

(11) **EP 2 461 192 A1**
(43) Date of publication of application: **06.06.2012**
(21) Application number: 11009000.8
(22) Date of filing: 11.11.2011
(51) Int. Cl.: G02B 6/00, G02F 1/13357

(54) **Liquid crystal display apparatus**

(30) Priority: 03.12.2010 JP 2010270149
(71) Applicant: Hitachi Consumer Electronics Co., Ltd., Tokyo 100-0004 (JP)
(72) Inventor: Yamashita, Yoshiharu, Chiyoda-ku Tokyo 100-8220 (JP); Kaku, Nobuyuki, Chiyoda-ku Tokyo 100-8220 (JP); Akazawa, Yoshiyuki, Chiyoda-ku Tokyo 100-8220 (JP); Yamamoto, Masahiro, Chiyoda-ku Tokyo 100-8220 (JP)
(74) Representative: Strehl Schübel-Hopf & Partner

(57) **Abstract**

In the backlight unit of a liquid crystal display apparatus, LEDs are arranged in two rows on an LED printed wiring board PWB, the LED PWB is assembled with light guide plates, and then a reflective sheet (40) is inserted between the LED PWB and the light guide plates. This manufacturing method leads to low workability and the LED PWB needs to be large in size, resulting in excessive materials and a larger weight.

Features of a liquid crystal display apparatus including a backlight unit are that a diffusing member (60) and an adjusting member are disposed on the exit surfaces of light guide plates (50) near a liquid crystal panel, the diffusing member diffusing light from the exit surfaces, the adjusting member adjusting the distribution of light from the exit surfaces, the light guide plate is as large as one of four equal parts of the liquid crystal panel divided in the vertical and horizontal directions, and LED PWBs (30) are arranged in three rows in the horizontal direction on each of the four separate light guide plates. Another feature is that the LED PWB has multiple LEDs arranged in a row.

## Description

### BACKGROUND

### TECHNICAL FIELD

The present invention relates to a liquid crystal display apparatus including a backlight unit in which LEDs are used for illumination of the liquid crystal display apparatus.

### DESCRIPTION OF THE RELATED ART

Conventionally, fluorescent tubes such as Cold Cathode Fluorescent Lamps(CCFLs) and External Electrode Fluorescent Lamps (EEFLs) have been used as the light sources of backlight units. Backlight units are light source supply units for illuminating liquid crystal display apparatuses.

In recent years, Light-Emitting Diodes (LEDs) have been mainly used as the light sources of the backlight units of liquid crystal display apparatuses. LEDs having longer lives than conventional fluorescent lamps with simple structures can be mass-produced, achieving lower cost. Moreover, LEDs feature low power consumption and excellent color reproduction color performance.

Generally, backlight units are categorized as a direct-type having light sources disposed under a liquid crystal panel and an edge-type having light sources on the sides of a liquid crystal panel. Japanese Patent Laid-Open No. 2010-177076 relates to an edge-type backlight unit in which light incident from the sides by LEDs is guided to a liquid crystal panel by light guide plates. The light guide plate is made of a transparent resin. For example, a surface of an acrylic board is subjected to special processing to enable uniform emission of light from the end face of the light guide plate.

### SUMMARY

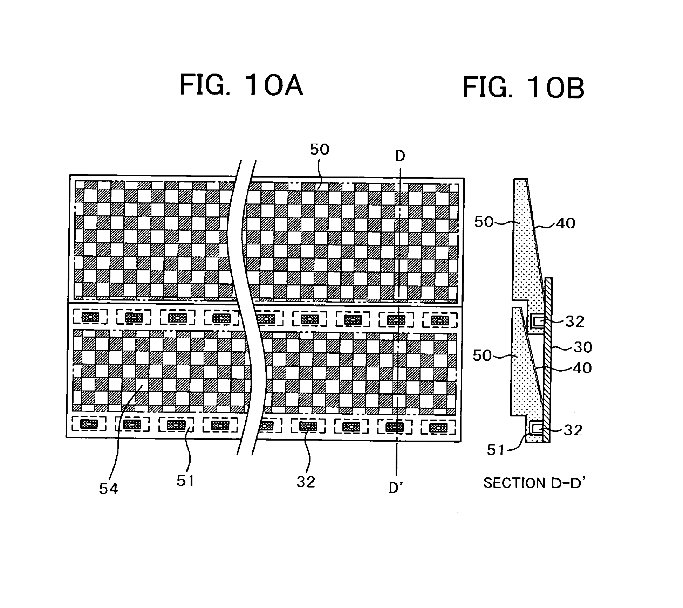

A conventional configuration in FIGS. 10A and 10B will be discussed below. FIGS. 10A and 10B illustrate a part of a conventional backlight unit in which an LED PWB (printed wiring board) having LEDs is attached to light guide plates.

In FIGS. 10A and 10B, reference numeral 50 denotes the light guide plates and reference numeral 30 denotes the LED PWB. The light guide plate 50 is a horizontally oriented rectangle and is made of transparent materials such as acryl. Rectangular holes 51 are laterally arranged in rows at the bottom and center of the light guide plates 50. The holes 51 have reversed concave shapes with the top portions connected to one another so as to contain LEDs.

The light guide plate 50 has a large thickness on a side where the rectangular holes are arranged in a row, that is, on a side where the LEDs are disposed. The light guide plate 50 decreases in thickness away from the LEDs. The LEDs are inserted into the rectangular holes of the light guide plate 50. Light is emitted from the LEDs to the end faces of the rectangular holes, and then the light incident on the end face of the light guide plate propagates through the light guide plate by total reflection, enabling plane emission over the top surface of the light guide plate.

On the backside of the light guide plate 50, a reflective sheet 40 is inserted to improve the luminous efficiency of the light guide plate.

The LEDs are arranged in two rows on the LED PWB. The light guide plates and the LED PWB are assembled as illustrated in FIG. 10B, and then the reflective sheets 40 are inserted between the light guide plates 50 and the LED PWB 30.

In this manufacturing method, unfortunately, the insertion of the reflective sheet 40 between the light guide plate 50 and the LED PWB 30 leads to low workability and the LED PWB needs to be large in size, resulting in excessive materials and a larger weight.

The present invention has been made in view of the above circumstances and provides a liquid crystal display apparatus that can achieve excellent workability, improved productivity, and a light weight in the backlight unit of the liquid crystal display apparatus.

In order to attain the object, the present invention is a liquid crystal display apparatus including a backlight unit, the backlight unit including: LEDs; light guide plates that guide and emit light from the LEDs to a liquid crystal panel; LED PWBs that drive the LEDs; and a chassis on which the LEDs, the light guide plates, and the LED PWBs are mounted, the light guide plate having a light exit surface that is divided into multiple regions opposed to the liquid crystal panel, the backlight unit controlling a light intensity in each of the regions according to an image, wherein the light guide plate is as large as one of four equal parts of the liquid crystal panel divided in vertical and horizontal directions.

The liquid crystal display apparatus including the backlight unit, wherein the LED PWBs are mounted in three rows in the horizontal direction on each of the four separate light guide plates.

The liquid crystal display apparatus containing the backlight unit, wherein the four separate light guide plates are flat.

The liquid crystal display apparatus containing the backlight unit, wherein the LEDs are arranged in a row on the LED PWB.

According to the present invention, the light guide plate used for the backlight unit is as large as one of four equal parts of the liquid crystal panel divided in the vertical and horizontal directions, the LED PWBs having the LEDs are disposed in three rows on the light guide plate, and the LEDs are arranged on each of the LED PWBs, thereby reducing a substrate area. Moreover, the four separate light guide plates improve workability and productivity.

### BRIEF DESCRIPTION OF THE DRAWINGS

Embodiment of the present invention will be described in detail based on the following figures, wherein:
FIG. 1 is an exploded perspective view illustrating the configuration of a backlight unit according to an embodiment of the present invention;
FIG. 2 is a cross-sectional view illustrating an assembled state of the backlight unit of FIG. 1;
FIG. 3A is a front view illustrating the shaft of a mold pin that fixes a light guide plate, a reflective sheet, and an LED PWB of FIG. 2;
FIG. 3B is a front view illustrating a receiving part that receives the shaft of the mold pin of FIG. 3A;
FIG. 3C is a front view illustrating the mold pin in an assembled state of the shaft of the mold pin of FIG. 3A and the receiving part of FIG. 3B;
FIG. 3D is a bottom view illustrating the mold pin of FIG. 3C; '
FIG. 4A is a top view illustrating the LED PWB according to the embodiment of the present invention;
FIG. 4B is a partial enlarged view illustrating the LED PWB of FIG. 4A;
FIG. 4C is a partial enlarged perspective view illustrating the LED PWB of FIG. 4A;
FIG. 5A is a top view illustrating the light guide plate according to the embodiment of the present invention;
FIG. 5B is a section B-B' illustrating the light guide plate of FIG. 5A;
FIG. 5C is a partial enlarged perspective view illustrating the light guide plate of FIG. 5A;
FIG. 5D is a section C-C' illustrating the light guide plate of FIG. 5C;
FIG. 5E illustrates the surface pattern of the light guide plate of FIG. 5A;
FIG. 6A illustrates a modification of the light guide plate according to the embodiment of the present invention;
FIG. 6B illustrates another modification of the light guide plate according to the embodiment of the present invention;
FIG. 7 is a top view illustrating the reflective sheet according to the embodiment of the present invention;
FIG. 8A is a top view illustrating a chassis that accommodates the backlight unit;
FIG. 8B is a section A-A' illustrating the chassis of FIG. 8A;
FIG. 9 is a perspective view illustrating the backside of the chassis on which substrates having the functions of a liquid crystal display apparatus are mounted;
FIG. 10A is a top view illustrating an assembled state of light guide plates and an LED PWB according to the related art; and
FIG. 10B is a section D-D' of FIG. 10A.

### DETAILED DESCRIPTION OF THE PREFERRED EMBODIMENT

An embodiment of the present invention will be specifically described below with reference to the accompanying drawings.

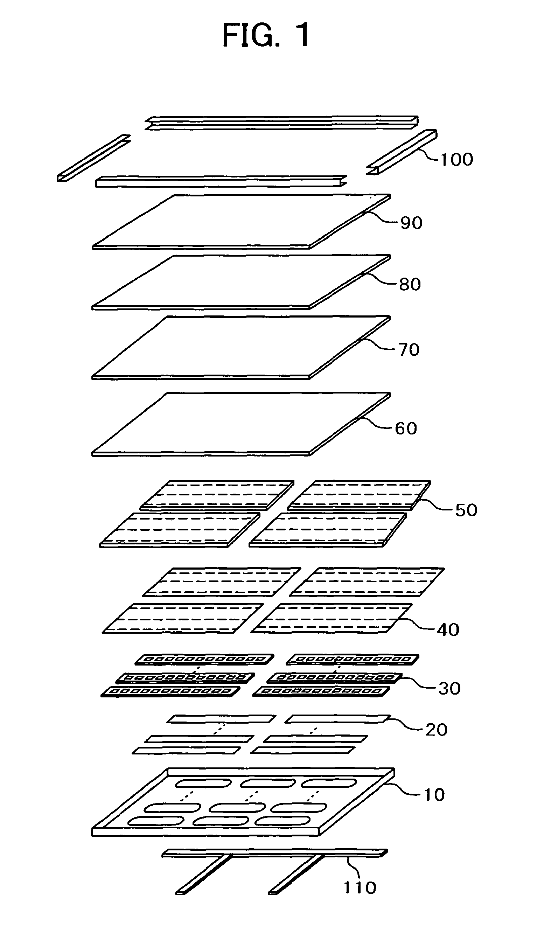

FIG. 1 is an exploded perspective view illustrating the configuration of the backlight unit of a liquid crystal display apparatus.

In FIG. 1, the backlight unit includes a chassis 10, insulating sheets 20 that insulate the chassis and LED PWBs, LED PWBs 30 having mounted LEDs, reflective sheets 40 that reflect LED light, light guide plates 50 that surface-emit LED light, a diffuser plate 60, a diffuser sheet 70, a prism sheet 80, and a polarized reflective sheet 90. These components are integrally fixed by a mold frame 100. The backlight unit illuminates a liquid crystal panel. The liquid crystal panel acting as a display screen contains liquid crystal materials that are sandwiched between two transparent substrates inside polarization filters of about 0.2 mm. The outer edge of the liquid crystal panel is sealed with a sealing material to prevent leakage of the liquid crystal materials. The two substrates each have a color filter on the front side and an array substrate on the backside.

Moreover, according to the embodiment of the present invention, the luminance signal of an image is analyzed and light emission in each block is controlled to a proper luminance in addition to the configuration of FIG. 1. The light emission of backlighting is precisely controlled to finely exhibit the contrast of an image. The backlighting is reduced in a dark part of the image and is increased in a bright part of the image, achieving a high-contrast image, that is, a sharp image. In the embodiment of the present invention, brightness is controlled in blocks, each containing three LEDs.

The diffuser plate 60 efficiently and evenly transmits light from the light guide plates to the liquid crystal panel. The diffuser plate 60 is mainly made of materials such as MS resin (styrene-methylmethacrylate copolymer resin), PS resin, and PC resin. Moreover, the diffuser plate 60 is prepared by mixing a light diffusing agent such as acryl and silicon with a base resin such as MS and PS, thereby improving light diffusion.

The diffuser sheet 70 is a translucent sheet that scatters and diffuses light to evenly transmit LED light over the liquid crystal panel.

The diffuser sheet 70 also makes the dots of the light guide plates less conspicuous while equalizing light. The diffuser sheet 70 is made of materials such as PET.

The prism sheet 80 is a kind of lens sheet that improves a luminance in a direction perpendicular to the liquid crystal panel. The prismatic sheet includes a base film (polyester resin) and a prismatic layer (acrylic resin or photopolymer) .

The installment of the backlight unit will be described below.

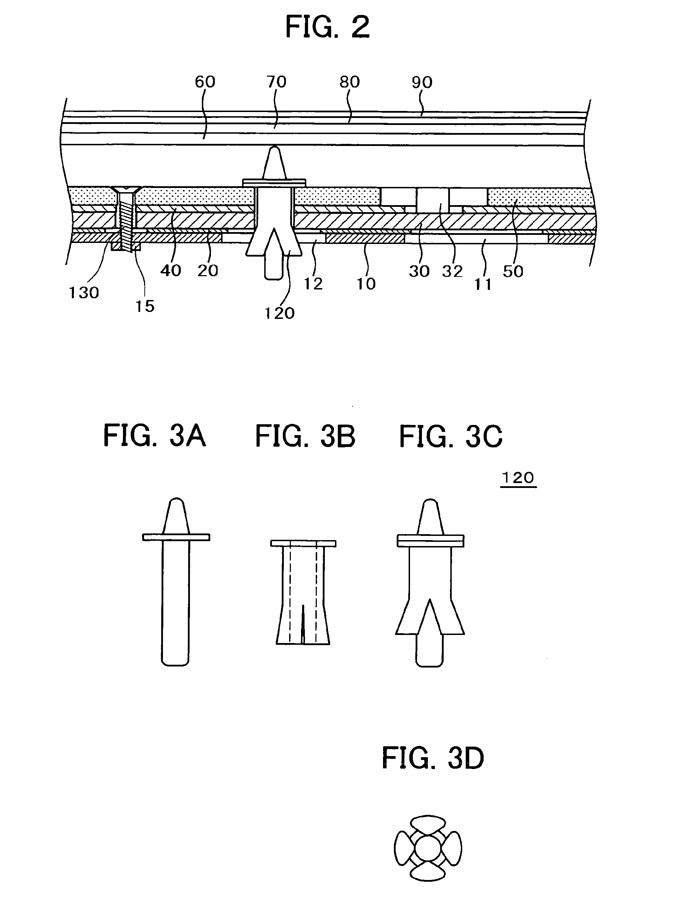

FIG. 2 is a cross-sectional view illustrating an assembled state of the configuration of FIG. 1 according to the embodiment of the present invention.

In FIG. 2, the chassis 10, the insulating sheets 20, the LED PWBs 30, the reflective sheets 40, the light guide plates 50, the diffuser plate 60, the diffuser sheet 70, the prism sheet 80, and the polarized reflection sheet 90 are sequentially stacked with a space provided between the light guide plates 50 and the diffuser plate 60.

The light guide plate 50, the reflective sheet 40, and the LED PWB 30 are fixed by a mold pin 120. The mold pin 120 made of nylon is configured as illustrated in FIGS. 3A to 3D. Specifically, a flanged round bar of FIG. 3A is inserted into the receiving part of a flanged cylinder that has cut portions on the opposite side from the flange of the cylinder as illustrated in FIG. 3B, so that the cut portions are extended as illustrated in FIGS. 3C and 3D.

In FIG. 2, the light guide plate 50, the reflective sheet 40, and the LED PWB 30 are tightly fixed by the mold pin 120. Fixed points will be discussed later. On the LED PWBs in a row, three points are fixed in the embodiment of the present invention. The number of fixed points is not limited to three.

The light guide plate 30 is fixed to the chassis 10 by a screw 130 illustrated on the left side of FIG. 2. The chassis 10 has a screw receiving portion 15. The fixation of the light guide plate 50 also allows fixation of the insulating sheet 20, the LED PWB 30, and the reflective sheet 40. In FIG. 2, the light guide plate 50, the insulating sheet 20, the LED PWB 30, and the reflective sheet 40 are fixed by the screw 130. The mold pin 120 may be used for the fixation.

The upper part of the flange of the mold pin 120 determines a height. Optical sheets such as the diffuser plate 60 are placed on the upper part of the flange to precisely keep the dimensions of the light guide plate and the optical sheets.

In FIG. 2, the screw part and the mold pin 120 are illustrated next to each other for the sake of explanation. In reality, the screw part and the mold pin 120 are separated from each other.

The chassis 10 includes rectangular holes 11 and circular holes 12 for the mold pin 120. The rectangular holes 11 correspond to the backside of the LED PWB. Wiring for driving the LEDs is provided through the rectangular holes 11.

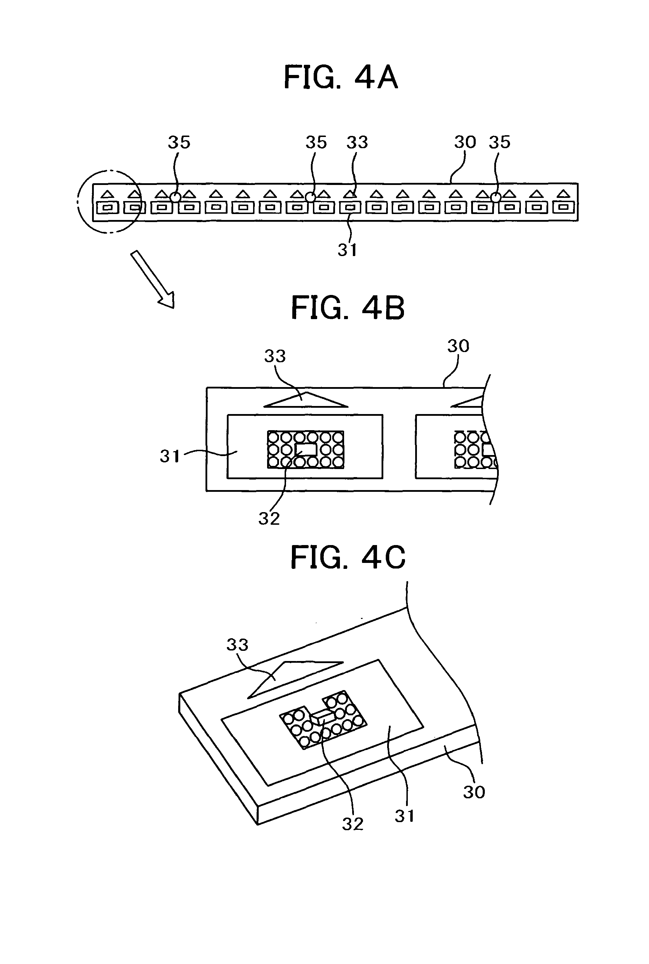

Referring to FIGS. 4A to 4C, the LED PWB according to the embodiment of the present invention will be described below.

The LED PWB 30 has LEDs 32 arranged in a single row unlike a conventional LED PWB having LEDs arranged in two rows.

In FIGS. 4A to 4C, reference numeral 31 denotes a white rectangular portion surrounding the central LED 32. The white portion is provided around the LED 32 to reflect light from the LED 32. Reference numeral 33 denotes a white mark on the LED PWB. The mark reminds an operator that LED light is emitted toward the top of a triangle during fabrication.

Round marks around the LED 32 on the LED PWB 30 are represent electrodes and through holes, which are wired on the backside of the LED PWB. Wired portions on the backside of the LED PWB correspond to the locations of the rectangular holes 11. The LED PWB is driven from the backside of the chassis. The LED 32 is a side-view type that laterally emits light.

The LED PWB 30 has three holes 35 that fix the position of the mold pins 120. Moreover, the LED PWB has an alignment boss (not shown) for alignment with the light guide plate 50. In the backlight unit, alignment of the LEDs and the light guide plates is important and thus the alignment boss is provided on the LED PWB in the embodiment of the present invention.

In the event of misalignment of the LED PWBs and the light guide plates, LED light is incident on the light guide plates with lower efficiency and an LED light distribution changes on the light guide plates, so that plane emission may become uneven on the top surfaces of the light guide plates. Furthermore, it may become impossible to analyze the luminance signal of the image and control light emission in each block to a proper luminance to precisely control the light emission of backlighting.

In order to prevent this problem, as described above, the LED PWBs 30 in the present embodiment are separately attached to positions corresponding to the respective mounting positions of the LEDs. These parts will be specifically described below.

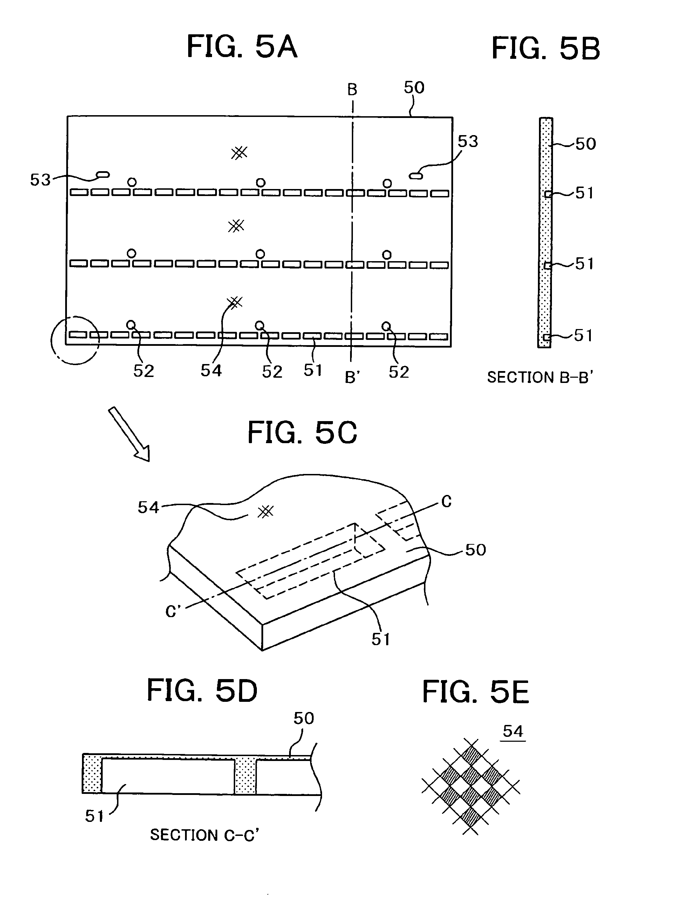

FIGS. 5A to 5E show the light guide plate according to the embodiment of the present invention. FIG. 5A is a top view of the light guide plate. FIG. 5B is a section B-B' . FIG. 5C is a partial perspective view of the light guide plate. FIG. 5D is a section C-C' of the partial perspective view. FIG. 5E shows a pattern.

The light guide plate 50 is typically made of a transparent acrylic resin. The light guide plate 50 is as large as one of four equal parts of a liquid crystal panel divided in the vertical and horizontal directions. For example, in the case of a 42-inch liquid crystal panel, the light guide plate 50 is about 50 cm in width and 33 cm in length. The light guide plate 50 is a flat plate having an even thickness of about 2 mm to 4 mm.

Furthermore, the light guide plate 50 includes holes 51 that have reversed concave shapes with the top portions connected to one another so as to contain the LEDs 32. The holes 51 having reversed concave shapes with the connected top portions are long rectangular holes.

The long holes 51 are laterally arranged in a row in each of the lower parts of three substantially equal parts that are separated with respect to a short side of the light guide plate 50. The number of long holes is nearly 20 for a lateral dimension of about 50 cm.

Light is guided to the front side or backside of the light guide plate. The light guide plate is patterned to have a uniform distribution on the surface. Modifications of the pattern include a checked pattern of the related art. FIG. 5E illustrates a checkered pattern as an example. The light guide plate is patterned by techniques such as injection molding with molds and sandblasting.

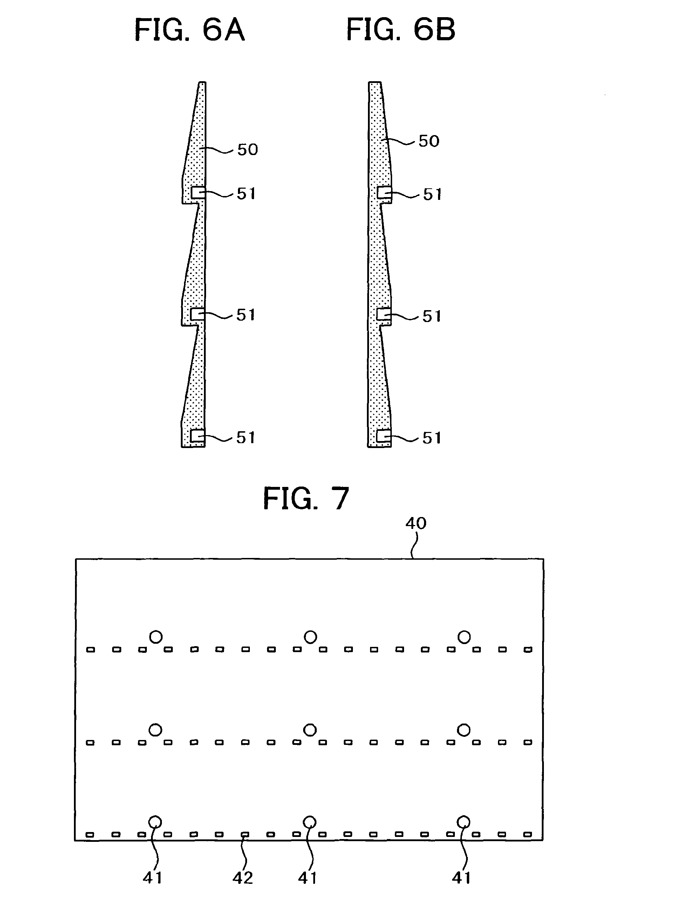

FIGS. 6A and 6B illustrate modifications of the light guide plate 50. FIG. 6A illustrates one of the modifications. FIG. 6A is a B-B' section of FIG. 5A that is a top view of the light guide plate. A plane emission side is processed such that the light guide plate 50 has a large thickness on the holes 51 containing the LEDs and decreases in thickness away from the LEDs. The light guide plate has a flat backside under which the reflective sheet is disposed. FIG. 6B illustrates a reversed configuration from FIG. 6A. The light guide plate has a flat top surface. On the backside, the light guide plate has a large thickness on the holes 51 containing the LEDs and decreases in thickness away from the LEDs.

The reflective sheet 40 will be described below. FIG. 7 illustrates the reflective sheet 40. The reflective sheet 40 is divided into three equal parts in the longitudinal direction. Moreover, holes 42 are disposed at the bottoms of the three equal parts. The holes 42 are rectangular holes that allow the insertion of the LEDs 32 mounted on the LED PWBs.

Thus, the number of the rectangular holes 42 on the reflective sheet 40 is about 20 for a lateral dimension of about 50 cm with the LEDs disposed at regular intervals. The holes 42 correspond to the respective LEDs of the LED PWBs.

Moreover, three through holes 41 are provided in each row to fix the reflective sheets 40 by screws to the chassis 10 from the light guide plates.

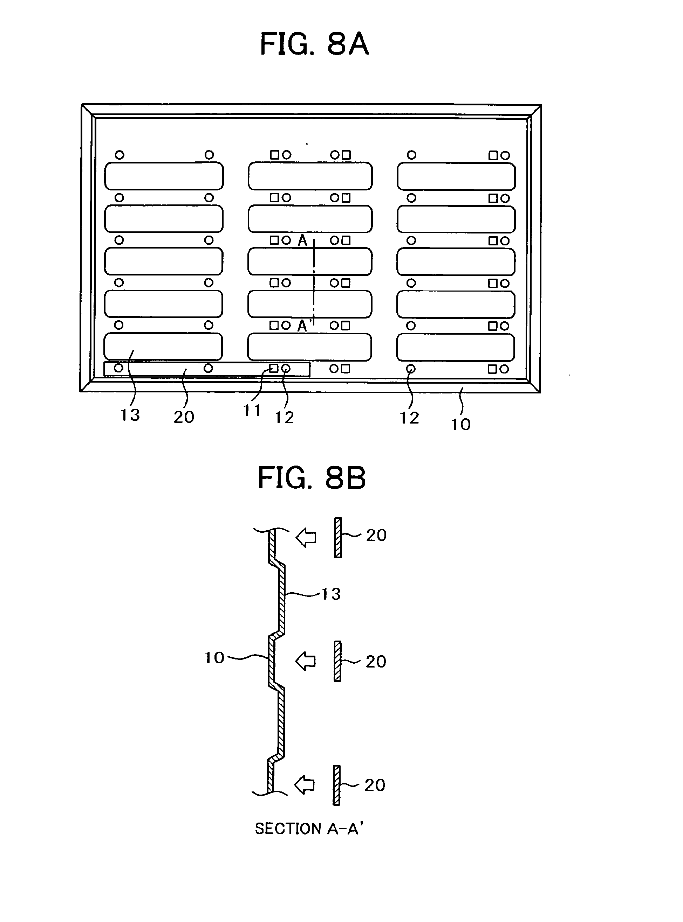

FIGS. 8A and 8B illustrate the chassis 10. FIG. 8A is a top view. FIG. 8B is a partial sectional view of the chassis 10. In the case of a 42-inch liquid crystal display apparatus, the chassis 10 is about 100 cm in width and 66 cm in length. The chassis 10 is typically made by pressing an iron plate. In the case where the chassis 10 is about 100 cm in width and 66 cm in length, the chassis 10 is likely to warp after pressing. Thus, the iron plate has a large thickness of about 1 mm. Alternatively, as illustrated in FIG. 1, a reinforcement 110 is attached and fixed on the backside of the chassis 10.

The strength of the chassis 10 is increased by ribs 13 provided on the central flat part of the chassis 10. The ribs 13 having laterally extended oblong figures are protruded to the inner side (backlight side). In FIG. 8A, the ribs 13 are arranged in three lines in the longitudinal direction. The number of lines is not limited to three. The chassis 10 is shaped like a box containing the backlight unit and has flanges on the outer edges.

As shown in FIG. 8B, the insulating sheets 20 are disposed between the ribs protruding to the backlight side from the chassis 10. The insulating sheets 20 prevent electric contact between the chassis 10 and the LED PWB placed on the insulating sheets 20 and dissipate heat generated from the LEDs.

In FIG. 8A, the insulating sheet 20 is installed at a point on the lower left side. The insulating plate is installed thus on a side of the rib 13. Likewise, other insulating plates are installed on the sides of the ribs.

Furthermore, the chassis 10 has an LED driving PWB for driving the LED PWB on the backside of the chassis 10, and the rectangular holes 11 through which the LED driving PWB is connected to the LED PWBs of the backlight unit.

On the front side (backlight side) of the chassis 10, the screw holes 130 (see FIG. 2) are provided to fix the light guide plates. The two screw holes are provided at each of four points.

Moreover, pins (not shown) for positioning the light guide plates 50 are provided on the front side of the chassis 10. The light guide plates 50 are positioned by inserting positioning holes 53 of the light guide plates 50 in FIG. 5A onto the bosses of the chassis 10. The positioning is slightly flexible in the lateral (horizontal) direction but is not flexible at all in the longitudinal (vertical) direction. This is because positioning of the light guide plates and the LEDs is strictly set.

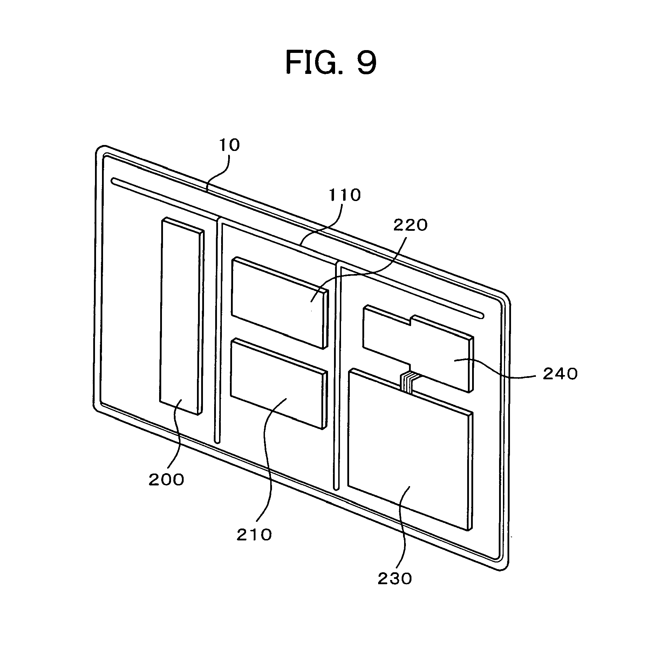

FIG. 9 illustrates the backside of the chassis 10.

On the backside of the chassis 10, the reinforcement 110 is installed and fixed and a boss for attaching the substrate is provided.

A circuit board on the backside of the chassis 10 includes an LED driving PWB 200, a power supply PWB 220 of the overall liquid crystal display apparatus, a liquid crystal driving PWB 210 for driving the liquid crystal panel, a signal processing PWB 230 serving as a main PWB, and an HDD 240. The HDD may be removed when necessary.

As described above, in the present embodiment, the separate LED PWBs 30 are attached to the positions corresponding to the respective holes 51 containing the LEDs. This is because a distance between the LEDs and entry faces in the holes 51 of the light guide plate 50 is not changed when heat from the LEDs expands the light guide plate 50. A change of a distance between the LEDs and the entry faces causes large variations in the efficiency of light incident from the LEDs and the distribution of light from the light guide plates 50, resulting in variations in luminance. In order to prevent this problem, the LED PWBs 30 corresponding to the respective holes 51 are separately attached. With this configuration, the LED PWBs 30 move according to the thermal expansion of the light guide plates 50 and thus a distance between the LEDs and the entry faces can be kept constant, suppressing variations in luminance.

It should be understood by those skilled in the art that various modifications, combinations, sub-combinations and alternations may occur depending on design requirements and other factors insofar as they are within the scope of the appended claims or the equivalents thereof.

## Claims

1. A liquid crystal display apparatus comprising a backlight unit,
the backlight unit including:
LEDs;
light guide plates that guide and emit light from the LEDs to a liquid crystal panel;
LED PWBs that drive the LEDs; and
a chassis on which the LEDs, the light guide plates, and the LED PWBs are mounted,
the light guide plate having a light exit surface that is divided into a plurality of regions opposed to the liquid crystal panel,
the backlight unit controlling a light intensity in each of the regions according to an image,
wherein the light guide plate is as large as one of four equal parts of the liquid crystal panel divided in vertical and horizontal directions.

2. The liquid crystal display apparatus comprising the backlight unit according to claim 1, wherein the LED PWBs are mounted in three rows in the horizontal direction on each of the four separate light guide plates.

3. The liquid crystal display apparatus comprising the backlight unit according to claim 1, wherein the four separate light guide plates are flat.

4. The liquid crystal display apparatus comprising the backlight unit according to claim 2, wherein the LEDs are arranged in a row on the LED PWB.

5. The liquid crystal display apparatus comprising the backlight unit according to claim 1, wherein the light guide plate has a front side and a backside at least one of which is patterned.

6. The liquid crystal display apparatus comprising the backlight unit according to claim 1, further comprising a reflective sheet between the light guide plate and the LED PWB, the reflective sheet being nearly as large as the light guide plate.
